# EUROPEAN PATENT APPLICATION

(11) **EP 3 104 233 A1**
(43) Date of publication of application: **14.12.2016**
(21) Application number: 14460036.8
(22) Date of filing: 14.07.2014
(51) Int. Cl.: G05B 9/02

(54) **A separating interface for electrical control line for explosion hazard zones provided with control line parameters monitoring**

(30) Priority: 23.06.2014 PL 40863214
(71) Applicant: Volen S.A., 40-301 Katowice (PL)
(72) Inventor: Mendrella, Tomasz, 40-717 Katowice (PL)
(74) Representative: Maslowski, Andrzej

(57) **Abstract**

The invention relates to a separating interface for electrical control line for explosion hazard zones provided with monitoring of control line parameters, such as a short circuit, earth fault, line resistance.

In the separating interface for an electric control line configuration according to the invention the control line input **8** with a control contact **7** is connected to a control contact **7** monitoring module **2** and to a control line parameters monitoring module **3**. The control contact **7** monitoring module **2** and the control line **8** parameters monitoring module **3** are installed inside a single housing located in non-hazardous zone. The electrical output circuit of the contact **7** monitoring module **2** comprises at least one contact of a mechanical or electronic relay **4**, whereas the electrical output circuit of the control line **8** parameters monitoring module **3** comprises at least one relay **5** contact and/or electronic contact output and circuits of two-way serial link **6**, for instance of the RS232C, RS485, CANBUS or ETHERNET type. In one embodiment the control contact **7** shunts resistor **9** of a pair of resistors **9**, **10**, in another embodiment of the separating interface configuration the contact **7** is connected in series to a diode reverse biased in relation to the control line **8**, whereas in each of the embodiments the control line **8**, along with the contact **7**, are located in the explosion hazard zone **12**. The interface is powered by an independent power circuit **13**.

## Description

The present invention relates to a separating interface for electrical control line for explosion hazard zones provided with monitoring of control line parameters, such as a short circuit, earth fault, line resistance.

Separators of an electrical control line for explosion hazard zones are used to connect circuits of equipment installed in explosion hazard zones to circuits of equipment located outside the explosion hazard zone.

In known solutions of the connection of the circuits of equipment installed in explosion hazard zones, either the state of the contact of a pushbutton, switch, relay or the change in resistance caused by the actuation of the contact of a pushbutton, switch, relay or other control circuit is monitored.

The object of the invention is to provide a separating interface for an electrical control line for explosion hazard zones provided with monitoring of control line parameters, such as a short circuit, earth fault, line resistance. In the interface configuration according to the invention the control line input with the control contact is connected to a control contact monitoring module and to a control line parameters monitoring module. The control contact monitoring module and the control line parameters monitoring module are installed inside a single housing located in the non-hazardous zone. The electrical output circuit of the contact monitoring module comprises at least one relay contact, whereas the electrical output circuit of the control line parameters monitoring module comprises at least one relay contact and circuits of two-way serial link, for instance of the RS232C, RS485, CANBUS or ETHERNET type. The control line along with the control contact are located in the explosion hazard zone, and the interface is powered by an independent power circuit.
Information on improper parameters of the control line located in the explosion hazard zone, wherein the parameters may be such as short circuit, earth fault, line resistance, triggers at least one parametric monitoring contact, disabling thereby the operation of the control line downstream of the control contact in the case of control line failure. The actuation of the output control contact is dependent on the proper state of the control line parameters and on the actuation of the control contact. The limits of the control line parameters that trigger the parametric monitoring contact are set by means of a serial link, for instance of the RS232C, RS485, CANBUS or ETHERNET type. The serial link enables reading the control line parameters and the state of the control contact, allowing thereby for a direct connection of the separating interface to the control and display system without the need to use the monitoring and parametric contacts. The electrical system of the parametric monitoring contact is preferably connected in series to the output control contact to provide "positive functional safety of control circuits". It is also important that the interface enables detecting control line failure, improving thereby substantially the functional safety of control systems, in particular the safety control circuits, such as those of pull cord switches or emergency stop pushbuttons.
The application of the solution according to the invention does not require any changes in the control system circuits, which facilitates the use of the interface in safety and control systems. The subject of the invention, due to its double role of control signal separator and control line state monitor, meets the technical requirements on functional safety of machines and equipment that require detection and annunciation of failure conditions.

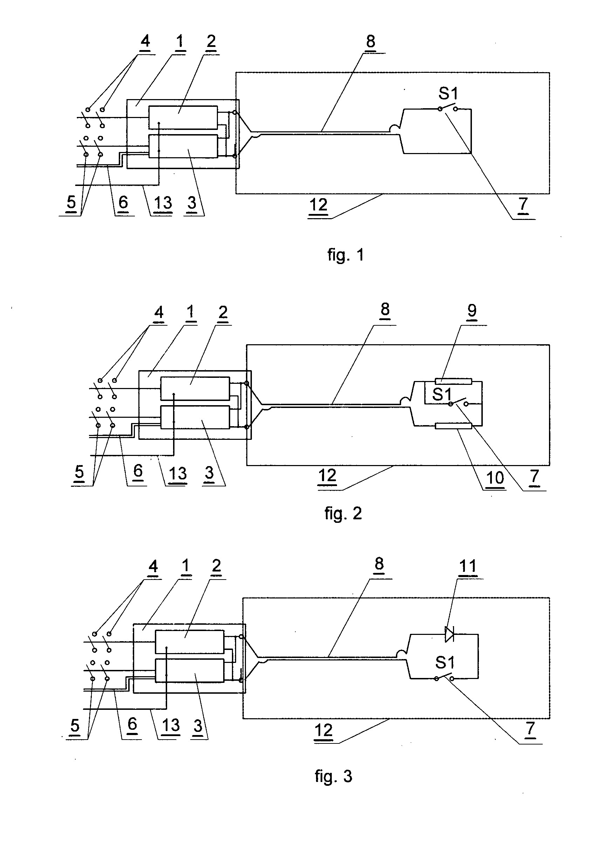

The invention is shown in an embodiment presented in the drawing, wherein Fig. 1 is the diagram of a separating interface for an electrical control line for explosion hazard zones provided with monitoring of control line parameters with only a control contact included in the control line circuit, whereas Figs. 2 and 3 show a configuration where the control contact cooperates with two resistors and with a diode reverse biased in relation to the control line, respectively.

As shown in the drawing, the control line input **8** with the control contact **7** is connected to the control contact **7** monitoring module **2** and to the control line parameters monitoring module **3** of the separating interface for an electrical control line for explosion hazard zones provided with monitoring of control line parameters according to the invention. The control contact **7** monitoring module **2** and the control line **8** parameters monitoring module **3** are installed inside a single housing **1** located in the non-hazardous zone. The electrical output circuit of the contact **7** monitoring module **2** comprises at least one output contact of a mechanical or electronic relay **4,** whereas the electrical output circuit of the control line **8** parameters monitoring module **3** comprises at least one relay **5** contact and/or electronic contact output and circuits of two-way serial link **6,** for instance of the RS232C, RS485, CANBUS or ETHERNET type. In one embodiment the control contact **7** shunts resistor **9** of a pair of resistors **9**, **10**, in another embodiment of the separating interface configuration the contact **7** is connected in series to a diode reverse biased in relation to the control line **8,** whereas in each of the embodiments the control line **8,** along with the contact **7,** are located in the explosion hazard zone **12**. The interface is powered by the independent power circuit **13**.

Upon powering, the control line **8** parameters monitoring **module 3** checks the parameters in relation to the set control line **8** limits. If the set control line **8** limits are exceeded, at least one contact of the mechanical or electronic relay **5** is caused to open. At the same time, after the control line **8** parameters are checked, the control contact **7** monitoring module **2** checks the state of the control contact **7** and causes the opening or closing of at least one output contact of mechanical or electronic relay **4,** said relay being energised after the control line **8** parameters are checked by the control line **8** parameters monitoring module **3** and after the state of the control contact **7** is checked by the control contact **7** monitoring module **2.** After the control line **8** parameters are checked by the control line **8** parameters monitoring module **3** and after the state of the control contact **7** is checked by the control contact **7** monitoring module **2,** information on the control line **8** parameters and on the state of the control contact **7** is transmitted to the control and display system via the serial link **6**. The control line **8** parameter limits are set using the serial link **6**.
The disclosed separating interface performs the function of a safety separator, consisting in that the electronic system of the separating interface intended for detecting the state of a pushbutton, switch, relay or contact of a device at the terminal of the control line and for measuring control line parameters, is designed so as to provide its output circuits with electrical parameters enabling the operation of the control line circuits in an explosion hazard zone, meaning that any connection of the input line of the separating interface, for instance shorting (sparking) will not release sufficient energy to cause ignition of explosive gases, e.g. methane, at any concentration when monitoring the state of a pushbutton, switch, relay or contact of a device at the terminal of the control line or when measuring control line parameters (for instance, damage to the line caused by an axe will not induce explosion of a gas, e.g. methane).
Functional and parametric features of the disclosed configuration are as follows. Functional aspect of the operation.
The separating interface checks the state of the control line contact, that is the interface checks the state of a pushbutton, switch, relay or contact of a device at the terminal of the control line, the result being the information whether the contact is open or closed (operation functionality).
Checking control line parameters.
The electronic system of the separating interface monitors the following parameters of the control line:
- resistance of the control line conductors is higher than the limit value (e.g. 600 ohm max.), this being a line failure condition (e.g. a break in line conductors) or an open contact of a pushbutton, switch, relay or contact of a device at the terminal of the control line;
- measurement of control line earth leakage, i.e. leakage current between control line and earthing conductor terminal, when resistance between the earthing terminal and control line is lower than the limit value (e.g. 2000 ohm), this being a line failure condition.

The described interface configuration operates in the following modes (control line terminal contacts monitoring functions).

The electronic system of the separating interface monitors the following states of contacts operating in the following configurations:
Contact and resistors configuration:
   - open contact - resistance measured by the electronic system of the separating interface is the sum of the resistances of control line conductors and of resistors **9** and **10**. When resistance is higher than the limit value (e.g. 1200 ohm), the contact is open;
   - closed contact - resistance measured by the electronic system of the separating interface is the sum of the resistances of control line conductors and of resistor **10.**

When resistance is lower than the limit value (e.g. 1200 ohm), the contact is closed;
- control line failure - resistance measured by the electronic system.

When resistance is higher than the limit value (e.g. 4000 ohm) or lower than the limit value (e.g. 800 ohm), the control line is damaged.

### Contact and diode configuration:

- open contact - resistance measured by the electronic system of the separating interface is the sum of the resistances of control line conductors. When resistance is higher than the limit value (e.g. 600 ohm) and the current cannot flow in both directions, the contact is open;
- closed contact - resistance measured by the electronic system of the separating interface is the sum of the resistances of control line conductors. When resistance is lower than the limit value (e.g. 600 ohm) and the current flows in one direction only, the contact is closed;
- control line failure - current flows in both directions and resistance is lower than the limit value (e.g. 600 ohm), the control line conductors are shorted together. Contact only configuration:
- open contact - resistance measured by the electronic system of the separating interface is the sum of the resistances of control line conductors. When resistance is higher than the limit value (e.g. 600 ohm) and the current cannot flow in both directions, the contact is open;
- closed contact - resistance measured by the electronic system of the separating interface is the sum of the resistances of control line conductors. When resistance is lower than the limit value (e.g. 600 ohm) and the current flows in two directions only, the contact is closed;
- control line failure - monitoring is not possible; for this reason the configuration comprising only a control line terminal contact is used only in very short enclosed control lines (e.g. 10 to 20 m long) installed on machines and equipment.

## Claims

1. A separating interface for an electrical control line for explosion hazard zones provided with monitoring of control line parameters, such as a short circuit, earth fault or line resistance, **characterised in that** the interface has a control contact **(7)** monitoring module **(2)** provided with at least one relay **(4)** contact, the interface furthermore has a control line **(8)** parameters monitoring module **(3)** provided with at least one relay **(5)** contact, and the interface furthermore has at least one serial link **(6),** said link being used for reading the state of the control contact **(7)** and the values of control line **(8)** parameters and enabling the setting of limit values of control line **(8)** parameters, wherein the control line **(8)** operates in a configuration comprising either the contact **(7)** only, or the contact **(7)** and resistors **(9, 10),** or the contact **(7)** and a diode **(11)**.

2. Interface according to claim 1, **characterised in that** relays **(4)** and (**5**) are electromechanical relays.

3. Interface according to claim 1, **characterised in that** relays **(4)** and (**5**) are electronic relays.
